# EUROPÄISCHE PATENTSCHRIFT

(11) **EP 1 275 832 B1**
(45) Veröffentlichungstag und Bekanntmachung des Hinweises auf die Patenterteilung: **06.09.2006**
(21) Anmeldenummer: 02012285.9
(22) Anmeldetag: 05.06.2002
(51) Int. Cl.: F02B 37/013, F02B 37/10, F02B 37/16, F02B 37/18, F02B 37/24, F02B 39/00, F02B 39/08, F02B 39/10

(54) **Vorrichtung zur mehrstufigen Aufladung einer Brennkraftmaschine**
Multiple step super charging apparatus for an internal combustion engine
Dispositif de suralimentation multi-étagée pour moteur à combustion interne

(30) Priorität: 12.07.2001 DE 10133918
(43) Veröffentlichungstag der Anmeldung: 15.01.2003
(73) Patentinhaber: Bayerische Motoren Werke Aktiengesellschaft, 80809 München (DE)
(72) Erfinder: Hiemesch, Detlef, 4400 Steyr (AT); Mayr, Karl, 4441 Behamberg (AT); Wimmer, Rudolf, 4431 Haidershofen (AT)

(56) Entgegenhaltungen:
- EP-A- 0 718 481
- EP-A- 0 735 253
- DE-A1- 10 015 291
- DE-A1- 10 022 052
- DE-A1- 19 853 360
- DE-C- 913 484
- GB-A- 436 058
- US-A- 4 028 892
- US-A- 4 453 381
- US-A- 5 408 979
- US-A- 5 697 217

## Beschreibung

Die Erfindung betrifft eine Vorrichtung zur seriellen Aufladung einer Brennkraftmaschine gemäß der im Oberbegriff des Patentanspruchs 1 genannten Merkmale.

Sie geht von dem US Patent 5,697,217 aus. Aus dieser ist eine Vorrichtung zur mehrstufigen seriellen Aufladung einer Brennkraftmaschine mit V-förmig angeordneten Zylinderbänken bekannt. Die Abgasturbolader sind in dem V-förmigen Raum angeordnet, wobei für jeden Abgaskrümmer ein Hochdruck-Abgasturbolader vorgesehen ist, die stromabwärts in einen gemeinsamen Niederdruck-Abgasturbolader münden. Die Abgasturbinen und die abgasführenden Rohre sind in einem gemeinsamen Gehäuse zwischen den Zylinderbänken angeordnet.

Zum technischen Umfeld wird auch auf die deutsche Patentschrift 913 484 hingewiesen, in der eine V-förmige Zweitakt-Brennkraftmaschine beschrieben ist, mit einem Abgasturbogebläsesatz, der einem an einem Ende der Maschine im V-Raum zwischen den Zylinderreihen liegenden, von der Maschine mechanisch angetriebenen Spülgebläse vorgeschaltet ist.

Ferner wird auf die US Patentanmeldung 4,028,892 hingewiesen. In dieser ist eine Zweitakt-Diesel-Brennkraftmaschine mit V-förmig angeordneten Zylinderreihen beschrieben. In dem V-förmigen Raum ist ein Abgasturbolader angeordnet, der Frischluft in Richtung eines Roots-Gebläses fördert, welches die Frischluft nochmals komprimiert und der Brennkraftmaschine zur Verbrennung zuführt.

Nachteilig bei der in dem US Patent 5,697,217 beschriebenen Anordnung ist der große Platzbedarf für die Aufladevorrichtung.

Aufgabe der vorliegenden Erfindung ist es, eine Platz sparende Aufladevorrichtung aufzuzeigen.

Diese Aufgabe wird durch die Merkmale im kennzeichnenden Teil des Patentanspruchs 1 gelöst.
Durch die erfindungsgemäße Anordnung werden speziell für die PKW-Anwendung günstige Bauraumverhältnisse erzielt. Die platz- und raumsparende Anordnung ermöglicht kurze Abgaswege zur Aufladevorrichtung, wodurch ein hohes Enthalpieangebot turbinenseitig auf der Abgas-Seite zur Verfügung steht und die Abgas-Turbolader mit einem hohen Wirkungsgrad betrieben werden können. Die Gasführung auf der Ansaugluft-Seite sowie auf der Abgas-Seite ist durch die direkten Verbindungen verkürzt und somit strömungstechnisch optimiert. Hieraus resultieren in erster Linie Kostenvorteile durch die Einsparung von komplexen Abgas- und Ansaugkomponenten. Ferner gewährleistet die vorgeschlagene Abgasführung die optimale Ausnützung der im Abgas enthaltenen Energie. Da die Verbindungsleitung gleichzeitig die kürzeste Verbindung zwischen zwei Lade-Pumpen darstellt, ist sie besonders kostengünstig und einfach zu fertigen.

Mit einer Anordnung gemäß Anspruch 2 ist eine Ansaugluft-Mengenregelung entsprechend dem Betriebszustand der Brennkraftmaschine möglich. In vorteilhafter Weise wird die Ansaugluft in zumindest zwei separaten Stufen verdichtet. Durch diese Maßnahme ist eine optimale Ausnutzung der im Abgas enthaltenen Energie möglich.

Durch den Antrieb zumindest einer Lade-Pumpe gemäß Anspruch 3 ist ein vom momentanen Betriebspunkt der Brennkraftmaschine unabhängiger Betrieb der Lade-Pumpe möglich. Somit kann in vorteilhafter Weise zumindest eine Lade-Pumpe bereits ab der Leerlaufdrehzahl der Brennkraftmaschine optimal eingesetzt werden, um bei Drehzahlen bereits knapp über der Leerlaufdrehzahl den bestmöglichen Brennkraftmaschinenlauf zu erreichen. Durch den vom Abgasmassenstrom unabhängigen Betrieb der Lade-Pumpe, ist jederzeit ein beliebiges Zu- oder Abschalten der Lade-Pumpe möglich.

Erfindungsgemäße Ausgestaltungen nach den Ansprüchen 4 bis 7 erlauben optimierte Betriebsbedingungen für ein mehrstufiges Aufladesystem in Verbindung mit einer Brennkraftmaschine zur Lösung des Zielkonfliktes zwischen einem guten Instationärverhalten und der Erzielung einer hohen Leistung, bzw. Drehmoment der Brennkraftmaschine. Durch die beliebige Kombination der verschiedenen Betriebsarten für die erste Lade-Pumpe und die zweite Lade-Pumpe des zweistufigen Aufladesystems werden alle Betriebspunkte der Brennkraftmaschine in idealer Weise von dem Aufladesystem unterstützt. Eine Kennfeldregelung ist in einfacher Weise realisierbar. Unter einer Kennfeldregelung wird die von der Brennkraftmaschine betriebspunktabhängige Zuordnung der aktuellen Drehzahl der Lade-Pumpe verstanden.
Darüber hinaus wird ein hervorragendes Ansprechverhalten der Brennkraftmaschine durch die gleichzeitige Nutzung der im Abgas enthaltenen Energie beider Zylinderbänke zum Antrieb einer Lade-Pumpe, hier zuerst die zweite Lade-Pumpe, erzielt und die Auslegung der zweiten Lade-Pumpe in kompakter Baugröße mit geringem Massenträgheitsmoment von Turbine und Verdichter, sowie ein günstiger Wirkungsgrad bei niedrigen Massendurchsätzen erreicht.
Die erste Lade-Pumpe ist auf hohe Nennleistung abgestimmt, was einen günstigen Wirkungsgrad bei hohen Massendurchsätzen zur Folge hat.
Aufgrund der Kombination der verschiedenen Betriebspunkte für jede einzelne Lade-Pumpe für jeden Betriebspunkt der Brennkraftmaschine, ist die Darstellung hoher Ladedruckverhältnisse bei einem gleichzeitig weitem Luftmassendurchsatzbereich möglich. Besonders positiv wirken sich diese Kombinationsmöglichkeiten dadurch aus, dass die Brennkraftmaschine zu jedem Zeitpunkt ihres Betriebes ausreichend Leistung und Drehmoment zur Verfügung stellen kann, während das sonst übliche bekannte "Turboloch" bei niedrigen Drehzahlen der Brennkraftmaschine eliminiert ist.

Die Ausgestaltung gemäß den Ansprüchen 8 und 9, einer sog. "Twin-Scroll"-Bauweise, ermöglicht die einfachste und kürzeste Verbindung von zwei Abgaskrümmern mit einer Lade-Pumpe. Durch die erfindungsgemäße Anordnung kann jeder Eingang auf der Abgas-Seite der Lade-Pumpe ideal an die jeweilige Geometrie des zugehörigen Abgaskrümmers angepasst werden. Die Beaufschlagung der Turbine der Lade-Pumpe mit von jedem Abgaskrümmer getrennt herangeleitetem Abgas erlaubt den Antrieb der Turbine von zwei Seiten. Idealerweise sind die Turbinenanströmpunkte um 180° zueinander verdreht, hieraus resultiert eine wesentlich geringere mechanische und thermische Belastung der Turbine, als dies bei einer einseitigen Beaufschlagung der Fall wäre. Eine längere Lebensdauer ist somit für die Lade-Pumpe zu erwarten.

Nach den Ansprüchen 10 und 11 werden abgasführende Bauteile, hierzu gehören z.B. das Maschinengehäuse für eine Lade-Pumpe, die Abgaskrümmer sowie die Abgasrohrverbindungen vorzugsweise in luftspaltisolierter Bauweise ausgeführt. Die luftspaltisolierte Bauweise bewirkt eine sehr gute thermische Isolationswirkung, die zu einer Reduktion der thermischen Belastung des Motorraumes führt, sowie zu einem höheren Enthalpieangebot für das Aufladesystem und einem günstigeren Temperaturniveau für die Abgasnachbehandlung. Eine luftspaltisolierte Bauweise wird z.B. durch eine doppellagige Blechkonstruktion erreicht, wobei die Bleche durch einen Luftspalt voneinander getrennt sind.
Ferner führt die luftspaltisolierte Bauweise zu einer vorteilhaften Gewichtsreduktion, die sich direkt auf den Kraftstoffverbrauch der Brennkraftmaschine im Fahrbetrieb auswirkt.
Die Maschinengehäuse der Lade-Pumpen können abweichend von der luftspaltisolierten Bauweise auch aus einem Gusseisenmaterial gefertigt sein.

Im Folgenden sind zwei bevorzugte Ausführungsbeispiele in zwei Figuren näher erläutert.
- Fig. 1:: Vorrichtung zur zweistufigen Aufladung einer Brennkraftmaschine, wobei an eine zweite Lade-Pumpe ein Bypass-Ventil angeordnet ist.
- Fig. 2:: Vorrichtung zur zweistufigen Aufladung einer Brennkraftmaschine, wobei eine Abgas-Seite einer ersten Lade-Pumpe und einer zweiten Lade-Pumpe über Bypass-Ventile mit Abgaskrümmern verbunden sind.

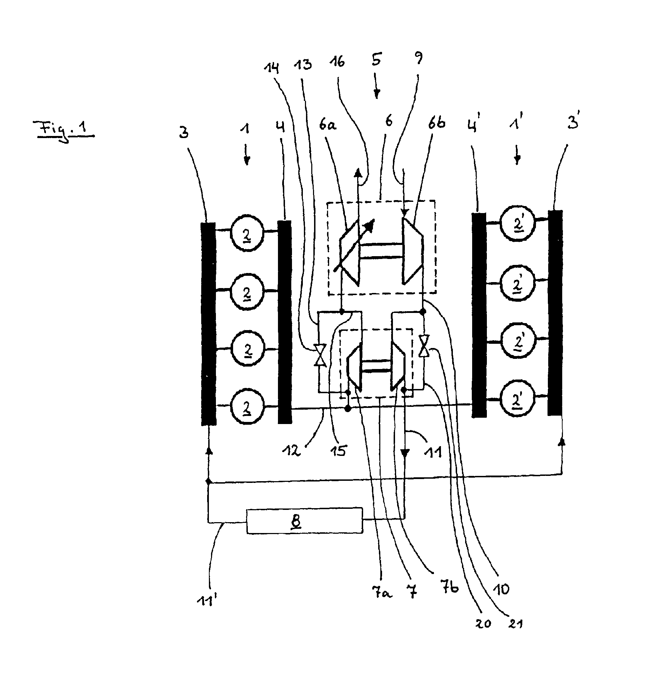

Fig. 1 zeigt schematisch dargestellt eine erste Zylinderbank 1 und eine zweite Zylinderbank 1' einer Brennkraftmaschine. In der ersten Zylinderbank 1 sind vier Zylinder 2 und in der zweiten Zylinderbank 1' sind ebenfalls vier Zylinder 2' jeweils in einer Reihe angeordnet. Ferner ist an die erste Zylinderbank 1 ein erster Ansaugluftsammler 3 und ein erster Abgaskrümmer 4 sowie an die zweite Zylinderbank 1' ein zweiter Ansaugluftsammler 3' und ein zweiter Abgaskrümmer 4' angeordnet. Die parallel zueinander angeordneten Zylinderbänke 1, 1' schließen miteinander einen V-förmigen Raum 5 ein. In diesen V-förmigen Raum 5 sind die Abgaskrümmer 4, 4' und eine erste Lade-Pumpe 6 mit einer Abgas-Seite 6a sowie einer Ansaugluft-Seite 6b und eine zweite Lade-Pumpe 7 mit einer Abgas-Seite 7a und Ansaugluft-Seite 7b angeordnet.

Die Ansaugluftführung erfolgt in dieser Schemadarstellung zuerst durch eine erste Ansaugluftleitung 9, anschließend durch die Ansaugluft-Seite 6b der ersten Lade-Pumpe 6, weiter durch eine Ansaugluft-Verbindungsleitung 10 in die Ansaugluft-Seite 7b der zweiten Lade-Pumpe 7 und durch die zweite Ansaugluftleitung 11 in einen Ladeluftkühler 8, und von dort weiter durch die zweite Ansaugluftleitung 11' gleichzeitig in den ersten Ansaugluftsammler 3 und den zweiten Ansaugluftsammler 3', die außerhalb des V-förmigen Raums 5 angeordnet sind.

Nach Umwandlung der Ansaugluft mit Kraftstoff in Abgas in den Zylindern 2, 2' wird dieses in die Abgaskrümmer 4, 4' geleitet und von dort weiter durch eine gemeinsame erste Abgasleitung 12 in die Abgas-Seite 6a der ersten Lade-Pumpe 6, und von dort durch eine Abgas-Verbindungsleitung 15 in die Abgas-Seite 7a der zweiten Lade-Pumpe 7 und von dort weiter in eine zweite Abgasleitung 16, die in ein nicht dargestelltes Auspuffsystem der Brennkraftmaschine mündet.

Ein Eingang und ein Ausgang der Abgas-Seite 6a sind über eine erste Bypass-Leitung 13 und ein erstes Bypass-Ventil 14 miteinander verbunden. Darüber hinaus sind ein Eingang und ein Ausgang der Ansaugluft-Seite 6b über eine zweite Bypass-Leitung 20 und ein viertes Bypass-Ventil 21 miteinander verbunden. Eine schematisch dargestellte Turbine auf der Abgas-Seite 6a verfügt über eine variable Turbinengeometrie, dargestellt durch einen Pfeil.

Bevor die Ansaugluft in die erste Ansaugluftleitung 9 eintritt, kann diese auch durch vorgeschaltete Filterelemente und/oder Dämpfungselemente, die hier ebenfalls nicht dargestellt sind, geleitet werden. Ferner kann zwischen der Ansaugluft-Seite 6b und der Ansaugluft-Seite 7b ein weiterer Ladeluftkühler angeordnet sein.

Die Brennkraftmaschine ist eine üblicherweise im Kraftfahrzeugbau eingesetzte Brennkraftmaschine mit V-förmig angeordneten Zylindern, hier eine Diesel-Brennkraftmaschine, es kann jedoch auch eine fremdgezündete Brennkraftmaschine sein. Die erste Lade-Pumpe 6 ist in dem Ausführungsbeispiel ein Niederdruck Abgas-Turbolader, die zweite Lade-Pumpe 7 ist ein Hochdruck Abgas-Turbolader. Allerdings kann zumindest die erste Lade-Pumpe 6 durch eine elektrisch oder hydraulisch betriebene Lade-Pumpe ersetzt werden.

Die Abgaskrümmer 4, 4' sowie sämtliche gasführenden Leitungen 9, 10, 11, 11', 12, 13, 15, 16 und 20, sowie die Maschinengehäuse der Lade-Pumpen 6, 6' die im V-förmigen Raum 5 angeordnet sind, sind in luftspaltisolierter Bauweise gefertigt. Es können jedoch auch einzelne Elemente aus Gusseisenmaterial angefertigt sein. Entscheidend bei der Materialauswahl für die Gehäuse bzw. die gasführenden Leitungen ist neben deren baulicher Komplexität die jeweilige Wärmebelastung der Bauteile, bzw. der Grad der Erwärmung der Ansaugluft, der möglichst gering gehalten sein soll, um einen bestmöglichen Zylinderfüllgrad für eine hohe Leistung und eine hohes Drehmoment zu erzielen.

Aufgrund der kompakten Anordnung der zwei Lade-Pumpen 6, 7 sowie der das Abgas und der die Ansaugluft führenden Bauteile ist die erfindungsgemäße Anordnung vor allem für Personenkraftwagen bevorzugt einsetzbar.

In weiteren Ausführungsbeispielen kann der hier beschriebenen Anordnung auch eine Abgasrückführsystem hinzugefügt werden. Hierbei wird beispielsweise aus dem ersten Abgaskrümmer 4 und dem zweiten Abgaskrümmer 4' ein Teil des Abgases über ein Abgasrückführregelventil und einen Abgasrückführkühler zu dem ersten Ansaugluftsammler 3 und dem zweiten Ansaugluftsammler 3' zurückgeführt.

Beim Betrieb der Brennkraftmaschine treibt Abgas aus der ersten und der zweiten Zylinderbank 1, 1' zuerst die zweite Lade-Pumpe 7 an. Der Abgas-Massenstrom wird von dem ersten Bypass-Ventil 14, das in der Bypass-Leitung 13 angeordnet ist, in zwei Abgas-Teilmassenströme aufgeteilt. Ein Abgas-Teilmassenstrom wird über die schematisch dargestellte Turbine der zweiten Lade-Pumpe 7 und der zweite Abgas-Teilmassenstrom wird über die ebenfalls schematisch dargestellte Turbine der ersten Lade-Pumpe 6 geleitet. Mit Hilfe des ersten Bypass-Ventils 14 werden die Abgas-Teilmassenströme entsprechend dem Betriebszustand der Brennkraftmaschine aufgeteilt. Die Regelung der Drehzahl der ersten Lade-Pumpe 6 und der zweiten Lade-Pumpe 7 erfolgt somit über die Aufteilung der Abgas-Teilmassenströme auf die zwei Ladepumpen 6, 7. Aufgrund der variablen Turbinengeometrie der ersten Lade-Pumpe 6 ist eine zusätzliche Drehzahlregelung über die Veränderung der Turbinengeometrie möglich. Wenn das erste Bypass-Ventil 14 komplett geschlossen ist, wird der gesamte Abgasmassenstrom zuerst durch die zweite Lade-Pumpe 7 und anschließend durch die erste Lade-Pumpe 6 hindurchgeleitet. Beim Öffnen des ersten Bypass-Ventils 14 wird mit zunehmender Öffnung ein immer größerer Anteil des Abgas-Massenstroms direkt der ersten Lade-Pumpe 6 zugeführt, ohne die Lade-Pumpe 7 zu durchströmen. Auf diese Art und Weise ist eine stufenlose, an jeden Betriebszustand der Brennkraftmaschine angepasste Regelung der zweistufigen Aufladung möglich. Für die Regelstrategie ist neben dem entsprechenden Betriebszustand der Brennkraftmaschine auch die zulässige Betriebsdrehzahl vor allem der zweiten Lade-Pumpe 7 zu berücksichtigen, die aufgrund ihrer kompakten Bauweise nicht für hohe Abgasmassendurchsätze, wie sie beispielsweise beim Vollastbetrieb im mittleren und oberen Drehzahlbereich auftreten, geeignet ist. Bei vollständig geöffnetem Bypass-System, beispielsweise bei einem Nennleistungspunkt, erfolgt die weitere Regelung des Ladedrucks durch die Veränderung der Turbinengeometrie die erste Lade-Pumpe 7, wobei der Anstellwinkel der Turbinenschaufeln bezüglich der Hauptströmungsrichtung des Abgases verändert wird, oder durch eine sog. waste gate-Ausführung.

Mittels des ladeluftseitigen Bypass-Systems, bestehend aus der zweiten Bypass-Leitung 20 und dem vierten Bypass-Ventil 21, besteht die Möglichkeit, bei sehr hohen Ansaugluft-Massendurchsätzen die Ladeluft des Verdichters der ersten Lade-Pumpe 6 neben dem Verdichter der zweiten Lade-Pumpe 7 auch direkt dem Ladeluftkühler 8 zuzuführen, um dadurch eine Drosselwirkung des Verdichters der zweiten Lade-Pumpe zu verhindern.

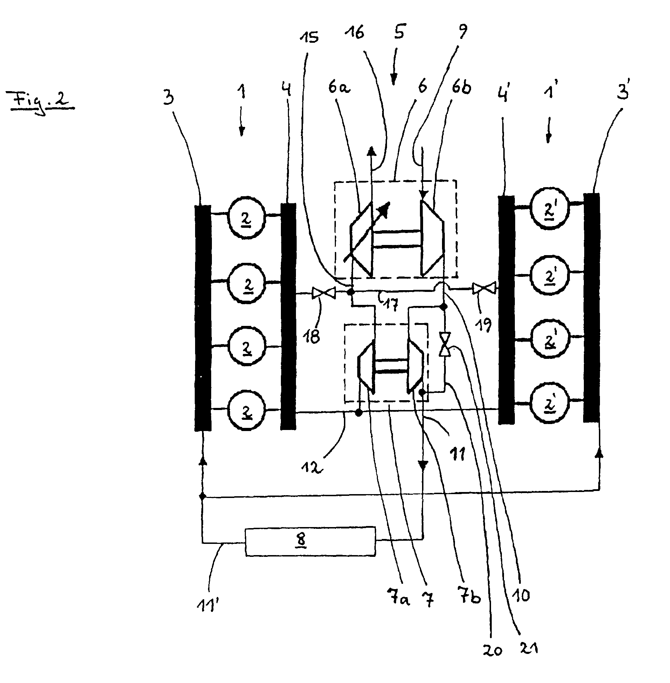

In Fig. 2 ist im wesentlichen der gesamte Aufbau der Brennkraftmaschine und der zweistufigen Aufladung aus Fig. 1 übernommen, ebenso gelten die in Fig. 1 beschriebenen Ausführungsvarianten auch für Fig. 2. Ferner gelten die Bezugszeichen aus Fig. 1 auch für Fig. 2.

Im Unterschied zur Fig. 1 verfügt das Ausführungsbeispiel in Fig. 2 nicht über die erste Bypass-Leitung 13 sowie das erste Bypass-Ventil 14, statt dessen verbindet eine Abgas-Kurzschlussleitung 17 den ersten Abgaskrümmer 4 über ein zweites Bypass-Ventil 18 und den zweiten Abgaskrümmer 4' über ein drittes Bypass-Ventil 19 mit der Abgas-Verbindungsleitung 15. Alle sonstigen Merkmale aus Fig. 1 bleiben unverändert.

Die Aufteilung des Abgas-Massenstroms auf die erste Lade-Pumpe 6 und die zweite Lade-Pumpe 7 erfolgt nun über das zweite Bypass-Ventil 18 und das dritte Bypass-Ventil 19. Dieses Ausführungsbeispiel gestattet eine einfachere, an die baulichen Randbedingungen angepasste Ausführung der mehrstufigen Aufladung der Brennkraftmaschine.

### Bezugszeichenliste

- 1: Erste Zylinderbank
- 1': Zweite Zylinderbank
- 2: Zylinder der ersten Zylinderbank
- 2': Zylinder der zweiten Zylinderbank
- 3: Erster Ansaugluftsammler
- 3': Zweiter Ansaugluftsammler
- 4: Erster Abgaskrümmer
- 4': Zweiter Abgaskrümmer
- 5: V-förmiger Raum
- 6: Erste Lade-Pumpe
- 6a: Abgas-Seite erste Lade-Pumpe
- 6b: Ansaugluft-Seite erste Lade-Pumpe
- 7: Zweite Lade-Pumpe
- 7a: Abgas-Seite zweite Lade-Pumpe
- 7b: Ansaugluft-Seite zweite Lade-Pumpe
- 8: Ladeluftkühler
- 9: erste Ansaugluftleitung
- 10: Ansaugluft-Verbindungsleitung
- 11, 11': Zweite Ansaugluftleitung
- 12: Erste Abgasleitung
- 13: Erste Bypass-Leitung
- 14: Erstes Bypass-Ventil
- 15: Abgas-Verbindungsleitung
- 16: Zweite Abgasleitung
- 17: Abgas-Kurzschlussleitung
- 18: Zweites Bypass-Ventil
- 19: Drittes Bypass-Ventil
- 20: Zweite Bypass-Leitung
- 21: Viertes Bypass-Ventil

## Patentansprüche

1. Vorrichtung zur seriellen Aufladung einer Brennkraftmaschine mit einer ersten Zylinderbank (1) und einer zweiten Zylinderbank (1'), die parallel zueinander angeordnet sind und einen V-förmigen Raum (5) einschließen und zumindest einer ersten Lade-Pumpe (6) und einer zweiten Lade-Pumpe (7), wobei zumindest die erste Lade-Pumpe (6) und die zweite Lade-Pumpe (7) in dem V-förmigen Raum (5) angeordnet sind, wobei die erste und die zweite Lade-Pumpe (6, 7) ein Abgas-Turbolader mit einer Ansaugluft-Seite (6b, 7b) und einer Abgas-Seite (6a, 7a) mit zumindest einem ersten Eingang und einem ersten Ausgang ist und der ersten Zylinderbank (1) ein erster Abgaskrümmer (4) und der zweiten Zylinderbank (1') ein zweiter Abgaskrümmer (4'), die in dem V-förmigen Raum (5) angeordnet sind, zugeordnet ist,
**dadurch gekennzeichnet dass**, der erste Abgaskrümmer (4) mit dem zweiten Abgaskrümmer (4') sowie mit dem ersten Eingang der zweiten Lade-Pumpe (7) über zumindest eine Abgasleitung verbunden ist und ein von den Abgaskrümmern (4, 4') kommendes Abgas zuerst durch die Abgas-Seite (7a) der zweiten Lade-Pumpe (7) und anschließend durch eine Abgas-Verbindungsleitung (15) durch die Abgas-Seite (6a) der ersten Lade-Pumpe (6) geleitet ist.

2. Vorrichtung zur mehrstufigen Aufladung einer Brennkraftmaschine nach Anspruch 1,
**dadurch gekennzeichnet, dass** die erste Lade-Pumpe (6) eine Niederdruck-Lade-Pumpe und die zweite Lade-Pumpe (7) ein Hochdruck-Lade-Pumpe ist.

3. Vorrichtung zur mehrstufigen Aufladung einer Brennkraftmaschine nach den Ansprüchen 1 und 2,
**dadurch gekennzeichnet, dass** zumindest eine Lade-Pumpe (6, 7) elektrisch oder hydraulisch angetrieben ist.

4. Vorrichtung zur mehrstufigen Aufladung einer Brennkraftmaschine nach einem der Ansprüche 1 bis 3,
**dadurch gekennzeichnet, dass** parallel zur Abgas-Seite der zweiten Lade-Pumpe (7) ein mit einem ersten Bypass-Ventil (14) regelbarer Bypass für das Abgas angeordnet ist und zumindest die Turbine der ersten Lade-Pumpe (6) über eine variable Turbinengeometrie verfügt und die Drehzahl der ersten Lade-Pumpe (6) mit dem ersten Bypass-Ventil (14) oder über die variable Turbinengeometrie geregelt ist.

5. Vorrichtung zur mehrstufigen Aufladung einer Brennkraftmaschine nach Anspruch 4,
**dadurch gekennzeichnet, dass** die Drehzahl der zweiten Lade-Pumpe (7) mit dem ersten Bypass-Ventil (14) geregelt ist.

6. Vorrichtung zur mehrstufigen Aufladung einer Brennkraftmaschine nach einem der Ansprüche 1 bis 3,
**dadurch gekennzeichnet, dass** der erste Abgaskrümmer (4) über ein zweites Bypass-Ventil (18) und der zweite Abgaskrümmer über ein drittes Bypass-Ventil (19) mit der Abgas-Verbindungsleitung verbunden ist und zumindest die Turbine der ersten Lade-Pumpe (6) über eine variable Turbinengeometrie verfügt und die Drehzahl der ersten Lade-Pumpe (6) mit dem zweiten Bypass-Ventil (18) und dem dritten Bypass-Ventil (19) oder über die variable Turbinengeometrie geregelt ist.

7. Vorrichtung zur mehrstufigen Aufladung einer Brennkraftmaschine nach Anspruch 6,
**dadurch gekennzeichnet, dass** die Drehzahl der zweiten Lade-Pumpe (7) mit dem zweiten Bypass-Ventil (18) und dem dritten Bypass-Ventil (19) geregelt ist.

8. Vorrichtung zur mehrstufigen Aufladung einer Brennkraftmaschine nach zumindest einem der zuvor genannten Ansprüche,
**dadurch gekennzeichnet, dass** die zweite Lade-Pumpe (7) über zwei Eingänge auf der Abgas-Seite (7a) verfügt und jeder Eingang mit einem Abgaskrümmer (4, 4') verbunden ist.

9. Vorrichtung zur mehrstufigen Aufladung einer Brennkraftmaschine nach Anspruch 8,
**dadurch gekennzeichnet, dass** die Turbine der zweiten Lade-Pumpe (7) von beiden Eingängen gleichzeitig mit Abgas beaufschlagt ist.

10. Vorrichtung zur mehrstufigen Aufladung einer Brennkraftmaschine nach zumindest einem der zuvor genannten Ansprüche, wobei zumindest eine Lade-Pumpe über zumindest ein Maschinengehäuse verfügt,
**dadurch gekennzeichnet, dass** zumindest ein Maschinengehäuse einen luftspaltisolierenden Blechaufbau aufweist oder aus Gusseisenmaterial ist.

11. Vorrichtung zur mehrstufigen Aufladung einer Brennkraftmaschine nach zumindest einem der zuvor genannten Ansprüche,
**dadurch gekennzeichnet, dass** zumindest die im V-förmigen Raum (5) angeordneten, das Abgas führenden Bauteile in luftspaltisolierter Blechbauweise gefertigt sind.

## Claims

1. A device for serial supercharging of an internal combustion engine comprising a first row (1) and a second row (1') of cylinders disposed in parallel with one another and enclosing a V-shaped space (5), and at least a thrust supercharge pump (6) and a second supercharge pump (7), wherein at least the first supercharge pump (6) and the second supercharge pump (7) are disposed in the V-shaped space (5), the first and the second supercharge pump (6, 7) being turbochargers with an intake-air side (6b, 7b) and an exhaust side (6a, 7a) with at least a first input and a first output, and the first row (1) of cylinders is associated with a first exhaust manifold (4) and the second row (1') is associated with a second exhaust manifold (4') disposed in the V-shaped space (5),
**characterised in that** the first exhaust manifold (4) is connected to the second exhaust manifold (4') and to the first input of the second supercharge pump (7) by at least one exhaust pipe and the exhaust gas from the manifolds (4, 4') is conveyed first through the exhaust side (7a) of the second supercharge pump (7) and then via a connecting line (15) through the exhaust side (6a) of the second supercharge pump (6).

2. A device for multi-stage supercharging of an internal combustion engine according to claim 1,
**characterised in that** the first supercharge pump (6) is a low-pressure pump and the second supercharge pump (7) is a high-pressure pump.

3. A device for multi-stage supercharging of an internal combustion engine according to claims 1 and 2,
**characterised in that** at least one supercharge pump (6, 7) is electrically or hydraulically driven.

4. A device for multi-stage supercharging of an internal combustion engine according to any of claims 1 to 3,
**characterised in that** a bypass for the exhaust gas, adjustable by a first bypass valve (14), is disposed in parallel with the exhaust side of the second supercharge pump (7) and at least the turbine of the first supercharge pump (6) has variable geometry and the speed of the first supercharge pump (6) is adjusted by the first bypass valve (14) or via the variable turbine geometry.

5. A device for multi-stage supercharging of an internal combustion engine according to claim 4,
**characterised in that** the speed of the second supercharge pump (7) is adjusted via the second bypass valve (14).

6. A device for multi-stage supercharging of an internal combustion engine according to any of claims 1 to 3,
**characterised in that** the first exhaust manifold (4) is connected via a second bypass valve (18) and the second exhaust manifold is connected via a third bypass valve (19) to the exhaust connecting pipe and at least the turbine of the first supercharge pump (6) has a variable geometry and the speed of the first supercharge pump (6) is adjusted by means of the second bypass valve (18) and the third bypass valve (19) or via the variable turbine geometry.

7. A device for multi-stage supercharging of an internal combustion engine according to claim 6,
**characterised in that** the speed of the second supercharge pump (7) is adjusted by means of the second bypass valve (18) and the third bypass valve (19).

8. A device for multi-stage supercharging of an internal combustion engine according to at least one of the preceding claims,
**characterised in that** the second supercharge pump (7) has two inputs on the exhaust side (7a) and each input is connected to an exhaust manifold (4, 4').

9. A device for multi-stage supercharging of an internal combustion engine according to claim 8,
**characterised in that** the turbine of the second supercharge pump (7) is supplied with exhaust gas simultaneously via both inputs.

10. A device for multi-stage supercharging of an internal combustion engine according to at least one of the preceding claims, wherein at least one supercharge pump has at least one engine casing,
**characterised in that** at least one engine casing has a sheet-metal construction insulated by an air gap or is made of cast-iron material.

11. A device for multi-stage supercharging of an internal combustion engine according to at least one of the previous claims,
**characterised in that** at least the exhaust gas-conveying components in the V-shaped space (5) are constructed of sheet metal and insulated by an air gap.

## Revendications

1. Dispositif de suralimentation sérielle d'un moteur à combustion interne comportant un premier banc de cylindres (1) et un second banc de cylindres (1') qui sont agencés parallèlement l'un à l'autre en formant un espace (5) en V et au moins une première pompe de suralimentation (6) et d'une seconde pompe de suralimentation (7), agencés dans l'espace (5) en V, la première et la seconde pompe de suralimentation (6, 7) étant un turbocompresseur de gaz d'échappement avec un côté d'air d'aspiration (6b, 7b) et un côté de gaz d'échappement (6a, 7a) avec au moins une première entrée et une première sortie, un premier collecteur du système d'échappement (4) étant associé au premier banc de cylindres (1) et un second collecteur du système d'échappement (4 ') étant associé au second banc de cylindres (1') dans l'espace (5) en V (5),
**caractérisé en ce que**
le premier collecteur du système d'échappement (4) est relié au second collecteur du système d'échappement (4') et à la première entrée de la seconde pompe de suralimentation (7) par au moins une conduite de gaz d'échappement, et du gaz d'échappement venant des collecteurs du système d'échappement (4, 4') est d'abord acheminé côté gaz d'échappement (7a) de la seconde pompe de suralimentation (7) et ensuite par une conduite de raccordement de gaz d'échappement (15) côté gaz d'échappement (6a) de la première pompe de suralimentation (6).

2. Dispositif de suralimentation multi-étagée pour moteur à combustion interne selon la revendication 1,
**caractérisé en ce que**
la première pompe de suralimentation (6) est une pompe de suralimentation basse pression et la seconde pompe de suralimentation (7) est une pompe de suralimentation haute pression.

3. Dispositif de suralimentation multi-étagée pour moteur à combustion interne selon les revendications 1 et 2,
**caractérisé par**
au moins une pompe de suralimentation (6, 7) commandée électriquement ou hydrauliquement.

4. Dispositif de suralimentation multi-étagée pour moteur à combustion interne selon l'une quelconque des revendications 1 à 3,
**caractérisé en ce qu'**
une dérivation réglable pour le gaz d'échappement est disposée parallèlement côté gaz d'échappement de la seconde pompe de suralimentation (7) et au moins la turbine de la première pompe de suralimentation (6) dispose d'une géométrie de turbine variable et la vitesse de rotation de la première pompe de suralimentation (6) est réglée par la première soupape de dérivation (14) ou par la géométrie de turbine variable.

5. Dispositif de suralimentation multi-étagée pour moteur à combustion interne selon la revendication 4,
**caractérisé en ce que**
la vitesse de rotation de la seconde pompe de suralimentation (7) est réglée par la première soupape de dérivation (14).

6. Dispositif de suralimentation multi-étagée pour moteur à combustion interne selon l'une quelconque des revendications 1 à 3,
**caractérisé en ce que**
le premier collecteur du système d'échappement (4) est relié par une deuxième soupape de dérivation (18) et le second collecteur du système d'échappement est relié par une troisième soupape de dérivation (19) à la conduite de raccordement de gaz d'échappement et au moins la turbine de la première pompe de suralimentation (6) dispose d'une géométrie de turbine variable et la vitesse de rotation de la première pompe de suralimentation (6) est réglée par la deuxième soupape de dérivation (18) et par la troisième soupape de dérivation (19) ou par la géométrie de turbine variable.

7. Dispositif de suralimentation multi-étagée pour moteur à combustion interne selon la revendication 6,
**caractérisé en ce que**
la vitesse de rotation de la seconde pompe de suralimentation (7) est réglée par la deuxième soupape de dérivation (18) et la troisième soupape de dérivation (19).

8. Dispositif de suralimentation multi-étagée pour moteur à combustion interne selon au moins l'une des revendications précédentes
**caractérisé en ce que**
la seconde pompe de suralimentation (7) dispose de deux entrées côté gaz d'échappement (7a) et chaque entrée est reliée à un collecteur du système d'échappement (4, 4 ').

9. Dispositif de suralimentation multi-étagée pour moteur à combustion interne selon la revendication 8,
**caractérisé en ce que**
la turbine de la seconde pompe de suralimentation (7) est alimentée simultanément depuis les deux entrées au moyen des gaz d'échappement.

10. Dispositif de suralimentation multi-étagée pour moteur à combustion interne selon au moins l'une des revendications précédentes,
dans lequel au moins une pompe de suralimentation dispose d'au moins un logement de moteur,
**caractérisé en ce qu'**
au moins un logement de moteur présente une construction en tôle isolante avec fentes d'aération ou est fabriqué en fonte.

11. Dispositif de suralimentation multi-étagée pour moteur à combustion interne selon au moins l'une des revendications précédentes,
**caractérisé en ce qu'**
au moins les composants agencés dans l'espace en forme de V (5) et qui acheminent les gaz d'échappement sont fabriqués dans une forme de construction en tôle isolée avec fentes d'aération.
